# Europäisches Patentamt
# European Patent Office
# Office européen des brevets

(19)

(11) Numéro de publication: **0 015 626**
**B1**

(12)

# FASCICULE DE BREVET EUROPEEN

(45) Date de publication du fascicule du brevet: **22.12.82**

(51) Int. Cl.³: **C 01 D 7/18**

(21) Numéro de dépôt: **80200209.7**

(22) Date de dépôt: **05.03.80**

(54) **Procédé et installation pour la préparation de cristaux de bicarbonate de sodium.**

(30) Priorité: **12.03.79 FR 7906675**

(43) Date de publication de la demande:
**17.09.80 Bulletin 80/19**

(45) Mention de la délivrance du brevet:
**22.12.82 Bulletin 82/51**

(84) Etats contractants désignés:
**AT BE DE FR GB IT NL**

(56) Documents cités:
**FR - A - 850 632**
**FR - A - 1 438 722**
**FR - A - 1 470 897**
**US - A - 2 737 440**
**US - A - 3 551 097**

(73) Titulaire: **SOLVAY & Cie (Société Anonyme)**
**Rue du Prince Albert, 33**
**B-1050 Bruxelles (BE)**

(72) Inventeur: **Verlaeten, Jean**
**Rue de Lombardzijde, 209**
**B-1120 Bruxelles (BE)**
Inventeur: **Hageman, Jacques**
**Rue Haute, 65**
**B-5871 Corbais (BE)**

(74) Mandataire: **Eischen, Roland**
**Solvay & Cie Département de la Propriété**
**Industrielle Rue de Ransbeek 310**
**B-1120 Bruxelles (BE)**

Courier Press, Leamington Spa, England.

## Procédé et installation pour la préparation de cristaux de bicarbonate de sodium

La présente invention est relative à un procédé et à une installation pour la préparation de cristaux de bicarbonate de sodium au départ d'une saumure ammoniacale.

Dans le procédé conventionnel de fabrication de la soude à l'ammoniaque, qui est largement décrit dans la littérature (Manufacture of Soda—Te-Pang Hou— Hafner Publishing Co.—1969), on traite une saumure concentrée de chlorure de sodium avec du gaz ammoniac de manière à obtenir une saumure ammoniacale, puis on carbonate celle-ci avec une quantité suffisante d'un gaz contenant de l'anhydride carbonique, pour cristalliser du bicarbonate de sodium.

La carbonatation des saumures ammoniacales et la cristallisation du bicarbonate de sodium sont habituellement exécutées dans des colonnes verticales de grande hauteur généralement dénommées, en technique, "tours de Solvay" (dito, p. 134). Ces colonnes de bicarbonatation connues sont alimentées par la saumure ammoniacale à leur sommet et par le gaz contenant de l'anhydride carbonique, dans leur partie inférieure; on y réalise de la sorte successivement une précarbonatation de la saumure ammoniacale dans la partie supérieure des colonnes, conduisant à la formation d'une saumure ammoniacale carbonatée, puis une cristallisation de bicarbonate de sodium au sein de cette solution, dans la partie médiane et la partie inférieure des colonnes.

Pour réaliser un rendement de carbonatation élevé et assurer en même temps l'obtention de cristaux bien formés et de dimensions optimum, on réalise généralement un gradient de température bien défini dans la partie médiane et la partie inférieure des colonnes, où a lieu la cristallisation. Pour réaliser le gradient de température requis, on dispose habituellement des refroidisseurs tubulaires horizontaux à l'intérieur des colonnes.

La présence des réfrigérants tubulaires dans les colonnes de bicarbonatation connues, constitue toutefois un inconvénient majeur de celles-ci. La cristallisation du bicarbonate de sodium conduit en effet à la formation d'un dépôt adhérent d'épaisseur rapidement croissante sur les tubes des réfrigérants, rendant ceux-ci inefficaces et obstruant les colonnes. Ce phénomène d'incrustation impose dès lors des arrêts périodiques fréquents des colonnes de bicarbonation et leur lavage avec une saumure ammoniacale.

Poure remédier aux inconvénients précités des colonnes de bicarbonatation connues, on propose, dans le brevet Etats-Unis 2 737 440 publié le 6 mars 1956, cédé à Chemical Construction Corp. de réaliser la carbonatation de la saumure ammoniacale et la cristallisation du bicarbonate de sodium à température constante, voisine de 35 à 40°C. A cet effet, on fait circuler la saumure ammoniacale et le gaz de bas en haut dans une chambre de cristallisation contenant une suspension aqueuse de cristaux de bicarbonate de sodium; simultanément on prélève par débordement hors de la chambre de cristallisation, un courant de saumure ammoniacale carbonatée, exempt de cristaux, on le refroidit puis on le recycle dans la chambre de cristallisation.

On propose par ailleurs, dans le brevet britannique 1 520 249, déposé le 11 septembre 1975 au nom de Asahi Glass Company Ltd. de refroidir la saumure ammoniacale avant de la carbonater, et de réaliser la carbonation et la cristallisation à basse température, dans plusieurs chambres de carbonatation successives, non refroidies, où la saumure ammoniacale est soumise à une circulation interne de recyclage au contact du gaz de carbonatation. En cas de besoin, on peut recycler, dans les chambres de bicarbonatation, une fraction, préalablement refroidie, de la suspension de cristaux qui en est extraite.

Ces procédés connus présentent l'inconvénient de réaliser la carbonatation et la cristallisation à une température uniforme qui est généralement trop élevée pour assurer un rendement de carbonatation optimum et trop basse pour assurer directement l'obtention de cristaux bien formés et de dimensions suffisantes. Par ailleurs, le recyclage interne forcé de la saumure ammoniacale tel que proposé dans le brevet britannique 1 520 249 présente le désavantage de soumettre les cristaux de bicarbonate de sodium à des efforts mécaniques d'attrition, tendant à les briser et à produire, en définitive, une masse de cristaux de formes et de dimensions disparates.

Un autre désavantage du procédé selon le brevet britannique 1 520 249 réside dans la grande complexité des chambres de carbonatation et de cristallisation.

L'invention a pour but de remédier aux inconvénients des procédés connus et concerne à cet effet un procédé pour la préparation de cristaux de bicarbonate de sodium selon lequel on traite une saumure ammoniacale carbonatée avec un gaz contenant de l'anhydride carbonique dans une chambre de cristallisation en présence de cristaux de bicarbonate de sodium et, simultanément, on prélève un courant de saumure ammoniacale carbonatée hors de ladite chambre, on le refroidit et on le recycle dans la chambre. Selon l'invention, on règle le débit et/ou le refroidissement du courant de saumure ammoniacale carbonatée de manière à abaisser progressivement la température de la saumure ammoniacale carbonatée dans la chambre de cristallisation depuis une valeur maximum comprise entre 40 et 70°C jusqu'á une valeur minimum comprise entre 15 et 30°C, au fur et à mesure qu'on la traite avec le gaz.

Dans le procédé selon l'invention, la saumure ammoniacale carbonatée est une solution aqueuse obtenue généralement en traitant d'abord une saumure de chlorure de sodium avec du gaz ammoniac puis en précarbonatant la saumure ammoniacale résultante, avec un gaz contenant de l'anhydride carbonique.

Le traitement de la saumure de chlorure de sodium avec le gaz ammoniac est avantageusement exécuté dans un absorbeur du type de ceux communément utilisés dans les installations de fabrication de la soude à l'ammoniaque (dito, p. 112). A titre d'exemple, des saumures ammoniacales qui conviennent dans le cadre de l'invention sont des solutions aqueuses saturées en chlorure de sodium et présentant un rapport de concentrations (NH$_3$):(Na) compris entre 1,1 et 1,16 (Die Erzeugung von Soda—Rant—1968, p. 96).

La précarbonatation de la saumure ammoniacale est réglée en sorte de produire une saumure ammoniacale carbonatée sensiblement saturée en bicarbonate de sodium. Elle est exécutée au moyen d'un gaz contenant de l'anhydride carbonique, généralement du gaz de four à chaux.

Dans la chambre de cristallisation, on poursuit la carbonatation de la saumure ammoniacale carbonatée, en la traitant avec un gaz contenant de l'anhydride carbonique, pour y cristalliser du bicarbonate de sodium. On utilise de préférence un gaz riche en anhydride carbonique, par exemple un gaz contenant de l'ordre de 40 à 75% d'anhydride carbonique, obtenu en mélangeant en proportions adéquates un gaz de four à chaux avec un gaz provenant de la calcination de bicarbonate de sodium en monocarbonate de sodium.

Led mode de prélèvement du courant de saumure ammoniacale carbonatée hors de la chambre de cristallisation n'est pas critique. Il peut être exécuté, par exemple, par débordement, par gravité, ou par pompage.

Selon le mode de prélèvement du courant de saumure ammoniacale carbonatée, celui-ci peut contenir des cristaux de bicarbonate de sodium ou en être exempt. Par exemple, dans le cas d'un prélèvement par débordement, ce courant est généralement exempt de cristaux. Par contre, dans le cas d'un prélèvement par soutirage au sein même de la chambre de cristallisation, le courant de saumure ammoniacale carbonatée contient habituellement des cristaux de bicarbonate de sodium.

Le refroidissement du courant de saumure ammoniacale carbonatée peut être exécuté par tout moyen adéquat.

Dans le cas particulier où le refroidissement du courant de saumure ammoniacale carbonatée est obtenu en le faisant circuler au contact d'une ou de plusieurs parois que l'on refroidit, par exemple au contact d'un faisceau de tubes ou de plaques d'un réfrigérant à circulation d'eau, il convient, selon une forme d'exécution avantageuse du procédé selon l'invention, de régler le refroidissement de la ou de chaque paroi et le débit de la suspension aqueuse à son contact de manière à abaisser la température de la suspension de 8°C au maximum, de préférence d'une valeur comprise entre 2 et 5°C au contact de la ou de chaque paroi, et de réaliser par ailleurs, le long de la ou de chaque paroi, un écart logarithmique moyen inférieur à 12°C, de préférence ne dépassant pas 10°C, l'écart logarithmique moyen étant défini par la relation:

$$\frac{\Delta T_2 - \Delta T_1}{1n\dfrac{\Delta T_2}{\Delta T_1}}$$

où: $\Delta T_1$ désigne la différence entre la température de la suspension aqueuse et la température de la paroi à l'extrémité d'amont de celle-ci;

$\Delta T_2$ désigne la différence entre la température de la suspension aqueuse et la température de la paroi à l'extrémité d'aval de celle-ci;

1n est le symbole du logarithme népérien.

On a observé, en pratique, qu'en respectant ces conditions de température, on réduit considérablement la formation d'incrustations sur les parois réfrigérées.

L'abaissement progressif de la température de la saumure ammoniacale carbonatée dans la chambre de cristallisation est réglé en fonction de la vitesse de cristallisation du bicarbonate de sodium, pour assurer à la fois un rendement de carbonatation optimum et l'obtention de cristaux de bicarbonate de sodium bien formés et de granulométrie adéquate. On réalise avantageusement un abaissement de température qui correspond sensiblement au gradient de température régnant généralement dans les colonnes de bicarbonatation des soudières à l'ammoniaque (Manufacture of Soda—Te-Pang Hou—1969, p. 137 et 138). A titre d'exemple, la température de la saumure ammoniacale carbonatée dans la chambre de cristallisation peut décroître progressivement depuis une valeur maximum comprise de préférence entre 50 et 65°C, jusqu'à une valeur minimum comprise de préférence entre 20 et 30°C.

Selon une forme d'exécution préférée du procédé selon l'invention, on fait circuler la saumure ammoniacale carbonatée dans plusieurs zones consécutives de la chambre de cristallisation pendant qu'on la traite avec le gaz, et on répartit le courant précité de saumure ammoniacale carbonatée en plusieurs fractions distinctes que l'on prélève respectivement hors des zones susdites de la chambre, que l'on refroidit séparément et que l'on recycle ensuite, chacune dans la zone d'où on l'a extraite. Dans cette forme d'exécution préférée du procédé selon l'invention, on fait avantageusement circuler le gaz à contre-courant de la saumure ammoniacale carbonatée dans les zones de la chambre de cristallisation, comme dans les colonnes de bicarbonatation connues des soudières à l'ammoniaque.

Dans une autre forme d'exécution avantageuse du procédé selon l'invention, avant de refroidir le courant de saumure ammoniacale carbonatée, ou chacune des fractions de ce courant, on le désursature en bicarbonate de sodium.

La désursaturation du courant de saumure ammoniacale carbonatée peut être opérée par toute méthode connue en soi, par exemple en le faisant circuler dans une chambre où le bicarbonate de sodium de sursaturation cristallise.

Toutes autres choses restant égales, cette forme d'exécution particulière du procédé selon l'invention présente l'avantage de réduire dans une large mesure la formation d'incrustations dans le circuit de refroidissement du courant de saumure ammoniacale carbonatée.

Dans une forme d'exécution supplémentaire du procédé selon l'invention, on soumet le courant de saumure ammoniacale carbonatée à un dégazage, avant de la refroidir.

Le dégazage a pour résultat d'extraire l'anhydride carbonique présent à l'état gazeux dans le courant de saumure ammoniacale carbonatée. Il présente l'avantage de réduire davantage la formation d'incrustations dans le circuit de refroidissement.

Le procédé selon l'invention peut être mis en oeuvre dans une installation comprenant, d'une part, une chambre de cristallisation qui présente une ouverture d'admission d'un gaz contenant de l'anhydride carbonique, une ouverture d'admission d'une saumure ammoniacale carbonatée à une extrémité de la chambre et une ouverture de soutirage d'une suspension aqueuse de bicarbonate de sodium à l'extrémité opposée de la chambre, et, d'autre part, un dispositif de refroidissement de la saumure ammoniacale carbonatée, le dispositif de refroidissement comprenant des réfrigérants qui sont disposés à l'extérieur de la chambre de cristallisation, l'un derrière l'autre entre les deux extrémités précitées, et qui sont raccordés à la chambre de cristallisation, chacun par une conduite d'admission et une conduite de retour d'une fraction de la saumure ammoniacale carbonatée.

Dans l'installation selon l'invention, le choix des réfrigérants, n'est pas critique, ceux-ci pouvant par exemple consister en échangeurs de chaleur à faisceaux tubulaires ou à plaques.

Dans une forme de réalisation préférée de l'installation selon l'invention, la chambre de cristallisation est constituée d'une colonne verticale à cloisons transversales ajourées, l'ouverture d'admission de la saumure ammoniacale carbonatée et l'ouverture d'admission du gaz sont disposées respectivement aux extrémités opposées de la colonne, et les enceintes réfrigérées sont raccordées à la colonne, chacune entre deux cloisons ajourées successives.

Dans cette forme de réalisation de l'invention, les cloisons ajourées sont avantageusement du type des passettes ou des plateaux perforés qui équipent normalement les colonnes de bicarbonatation des soudières à l'ammoniaque et qui sont bien connus dans le domaine de l'art (Manufacture of Soda—Te-Pang Hou—1969—p. 134 et 135; brevet Etats-Unis 3 551 097 publié le 29.12.1970).

Le procédé et l'installation selon l'invention permettent de s'affranchir de la présence de réfrigérants dans les chambres de cristallisation, ceux-ci étant disposés à l'extérieur desdites chambres.

Le procédé et l'installation selon l'invention apportent de la sorte l'avantage appréciable de réduire dans une très large mesure les phénomènes d'incrustation dans le chambres de cristallisation. Toutes autres choses étant égales, l'invention permet, en conséquence, de réduire la fréquence des arrêts des installations, nécessités par leur lavage

La possibilité, selon l'invention, de s'affranchir de tubes refroidisseurs à l'intérieur des chambres de cristallisation apporte l'avantage supplémentaire d'augmenter leur volume utile et, par voie de conséquence, leur productivité. Elle permet par ailleurs d'élargir les colonnes de bicarbonatation des soudières à l'ammoniaque, dont la section transversale était limitée jusqu'à présent, par la résistance à la flexion des tubes des réfrigérants internes.

Les cristaux de bicarbonate de sodium obtenus par le procédé selon l'invention sont bien formés et ils conviennent bien pour la fabrication de soude légère ou de soude dense.

Des particularités et détails de l'invention ressortiront de la description suivante des dessins annexés.

La figure 1 représente schématiquement, en élévation, une forme de réalisation particulière de l'installation selon l'invention.

La figure 2 montre schématiquement, à grande échelle, un détail d'une variante d'exécution de la forme de réalisation de l'installation de la figure 1.

Dans ces figures, des mêmes notations de référence désignent des éléments identiques.

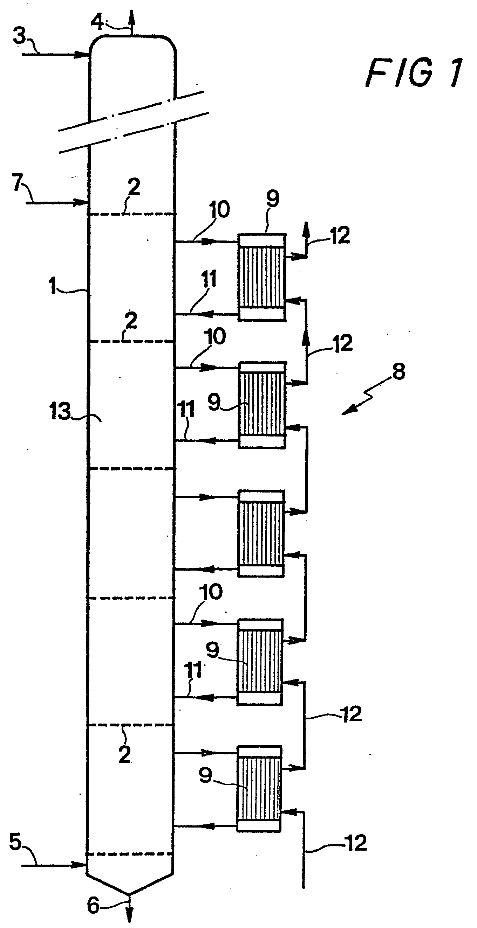

L'installation représentée à la figure 1 comprend une colonne verticale 1, par exemple en acier.

La colonne 1 est munie, de manière connue en soi pour les colonnes de bicarbonatation des soudières à l'ammoniaque, de passettes transversales 2, régulièrement réparties sur toute la hauteur de la colonne.

La colonne 1 est par ailleurs raccordée, à son extrémité supérieure, à un conduit 3 pour l'admission d'une saumure ammoniacale et à un conduit 4 pour l'evacuation d'un gaz pauvre en anhydride carbonique. A son extrémité inférieure, la colonne 1 est raccordée à un conduit 5 pour l'admission d'un gaz de carbonatation, contenant généralement de 40 à 75% d'anhydride carbonique, et à un conduit 6 pour le soutirage d'une suspension aqueuse de cristaux de bicarbonate de sodium.

On prévoit en outre une conduite 7 pour l'admission d'un gaz de carbonatation à plus faible teneur en anhydride carbonique (généralement de l'ordre de 40%), au voisinage du tiers supérieur de la colonne 1.

La partie médiane et la partie inférieur de la colonne 1 sont destinées à servir de chambre de cristallisation. Ces parties de la colonne sont raccordées à un dispositif de refroidissement 8, conçu pour assurer le refroidissement continu d'un courant de saumure ammoniacale carbonatée prélevé hors de la colonne 1. Ce dispositif de refroidissement 8 est constitué de plusieurs réfrigérants étagés 9, qui sont raccordés en dérivation à la colonne 1, chacun entre deux passettes successives 2, par une conduite d'admission 10 et une conduite de retour 11.

Les réfrigérants 9 sont du type à circulation d'eau, à faisceaux de tubes ou de plaques. Ils sont montés en série sur le circuit d'eau de refroidissement par des conduites 12, de manière que l'eau froide pénètre d'abord dans le réfrigérant inférieur et progresse ensuite dans les réfrigérants successifs jusqu'au réfrigérant supérieur.

Pendant le fonctionnement de l'installation représentée à la figure, une saumure ammoniacale est introduite en continu à la partie supérieure de la colonne, via le conduit 3; simultanément, un gaz de carbonatation, riche en anhydride carbonique, est introduit à la base de la colonne via le conduit 5, et un gaz à plus faible teneur en anhydride carbonique est introduit dans la colonne via le conduit 7.

Pendant son mouvement descendant dans la partie supérieure de la colonne 1, la saumure ammoniacale est progressivement carbonatée par le gaz, pour former une solution ammoniacale carbonatée. Dans la partie médiane et la partie inférieure de la colonne, la saumure ammoniacale carbonatée est saturée en bicarbonate de sodium et est le siège d'une cristallisation de bicarbonate de sodium, qui s'accompagne d'un dégagement de chaleur important.

Pour garantir l'obtention de cristaux bien formés et de dimensions suffisantes et pour permettre en même temps un rendement de carbonatation maximum, on impose, dans la colonne, un gradient de température bien défini, analogue à celui régnant habituellement dans les colonnes de bicarbonatation connues des soudières à l'ammoniaque (Manufacture of Soda—Te-Pang Hou—1969—p. 137 et 138). En général, on choisit un gradient de température pour lequel celle-ci croît régulièrement de haut en bas dans le tiers supérieur de la colonne, passe par un maximum de l'ordre de 50 à 65°C, puis décroît régulièrement dans la partie médiane et la partie inférieure de la colonne 1, poure atteindre une valeur voisine de 20 à 30°C près de la base de celle-ci.

Le gradient de température requis dans la partie médiane et la partie inférieure de la colonne 1 est réalisé en y refroidissant de manière réglée la suspension aqueuse de cristaux de bicarbonate de sodium qui y circule. A cet effet, dans chaque zone 13 délimitée entre deux passettes successives 2, on prélève, via la conduite 10, une fraction de la suspension aqueuse, on la refroidit par passage dans le réfrigérant 9 correspondant, puis on la recycle dans la zone 13 d'où elle provient, par la conduite de retour 11.

En réglant de manière définie les débits respectifs des fractions de suspension aqueuse dérivées de la sorte vers les réfrigérants latéraux 9, ainsi que la température et le débit de l'eau de refroidissement alimentant ceux-ci, on peut modifier à volonté le gradient de température dans la colonne.

Conformément à l'invention, dans l'installation qui vient d'être décrite, en référence à la figure 1, la colonne de bicarbonatation 1 est exempte de réfrigérants internes, ce qui lui confère notamment l'avantage de permettre un entretien aisé des réfrigérants 9, sans provoquer de perturbation dans le fonctionement normal de l'installation. Il suffit en effet de brancher un réfrigérant auxiliaire, non représenté, en dérivation sur le réfrigérant défectueux, puis d'isoler ce dernier au moyen de vannes d'obturation appropriées.

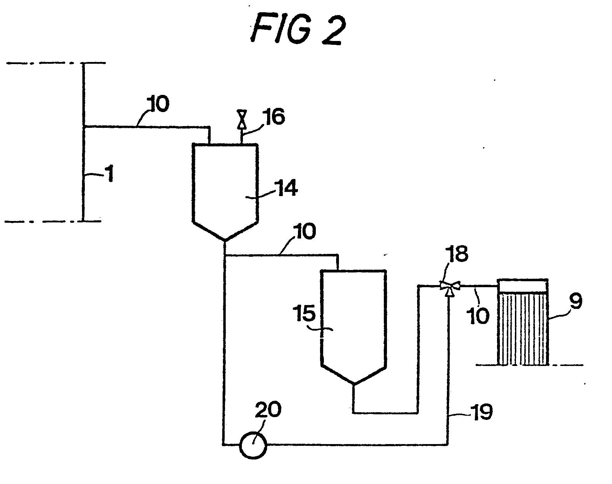

Dans la variante d'exécution représentée à la figure 2, chaque conduite 10 pour l'admission de la suspension aqueuse dans les réfrigérants 9 comprend une chambre de dégazage 14 et une chambre de désursaturation 15.

Pendant son passage dans la chambre de dégazage 14, la suspension aqueuse est débarrassée de l'anhydride carbonique gazeux qu'elles contient. Celui-ci s'accumule progressivement dans la zone supérieure de la chambre de dégazage 14 d'où il est évacué en 16.

La chambre de désursaturation 15, qui fait suite à la chambre de dégazage 14, consiste en un cristalliseur où du bicarbonate de sodium à l'état sursaturé dans la saumure ammoniacale carbonatée de la suspension, cristallise.

On recueille de la sorte, à la sortie de la chambre 15, une suspension aqueuse de cristaux de bicarbonate de sodium qui n'est plus sursaturée. Celle-ci est ensuite introduite dans le réfrigérant 9, d'où elle est renvoyée dans la colonne 1, comme décrit plus haut en référence à la figure 1.

Selon une réalisation modifiée de la forme d'exécution de la figure 2, une fraction de la suspension aqueuse désursaturée, sortant de la chambre 15, est prélevée par une vanne régulatrice de débit 18 et recyclée, via une conduite 19 et une pompe 20, dans le courant de suspension circulant dans la canalisation 10, en amont de la chambre de désursaturation 15.

Dans cette forme de réalisation modifiée de l'invention, le recyclage de la fraction de suspension désursaturée peut être fait entre les chambres de dégazage 14 et de désursaturation 15, comme schématisé à la figure 2. En variante, le recyclage peut être fait en amont de la chambre de dégazage 14.

Le recyclage d'une fraction de la suspension désursaturée, en amont de la chambre de désursaturation 15 et éventuellement de la chambre de dégazage 14 réduit le risque d'une formation d'incrustations sur la paroi du tronçon de la canalisation 10, joignant la colonne 1 aux chambres 14 et 15.

Selon une autre variante, non représentée, de l'installation de la figure 2, les chambres de dégazage 14 et de désursaturation 15 sont réunies en une chambre unique, dans laquelle on procède simultanément au dégazage de la suspension aqueuse et à la cristallisation du bicarbonate de sodium qui est à l'état sursaturé.

L'exemple d'application suivant va faire apparaître un aspect intéressant de l'invention.

Dans une chambre de cristallisation tubulaire, on a cristallisé du bicarbonate de sodium en traitant 40 l d'une saumure ammoniacale avec un gaz contenant 97,5% d'anhydride carbonique. Le débit horaire du gaz a été réglé à 2,2 m³ normaux. La saumure ammoniacale de départ était de 25°C et elle avait la composition suivante:

| | | |
|---|---|---|
| $NH_3$ libre | : | 80,8 g/l |
| $NH_4Cl$ | : | — |
| $CO_3^{--}$ | : | 94,5 g/l |
| $Cl^-$ | : | 145,5 g/l |

Après vingt six minutes, on a observé l'apparition de cristaux de bicarbonate de sodium dans la saumure ammoniacale, et la température a commencé à croître dans la chambre de cristallisation, pour atteindre une valeur voisine de 60°C au bout de 80 minutes de carbonatation. Dès ce moment, on a commencé à faire décroître régulièrement la température dans la chambre de cristallisation, en prélevant hors de celle-ci un courant de la suspension aqueuse de bicarbonate de sodium qui s'y trouve et en le faisant circuler en navette entre ladite chambre et un réfrigérant extérieur, au moyen d'une pompe de circulation. On a par ailleurs poursuivi le traitement de carbonatation avec le gaz dans la chambre de cristallisation.

Le réfrigérant utilisé était du type à plaques, à circulation d'eau, présentant une surface totale d'échange, égale à 0,077 m². La circulation d'eau dans le réfrigérant était à contre-courant de celle de la suspension aqueuse.

On a réglé le fonctionnement de la pompe de circulation, de manière que le débit du courant de suspension de bicarbonate de sodium dans le réfrigérant soit égal à 0,225 m³/h, ce qui a représenté une vitesse de circulation de l'ordre de 0,08 m/s.

La température et le débit d'eau dans le réfrigérant ont part ailleurs été réglés pour respecter une évolution réglée de la température dans la chambre de cristallisation, cette évolution correspondant approximativement au gradient de température régnant habituellement dans la partie médiane et la partie inférieure des colonnes de bicarbonatation des soudières à l'ammoniaque. La température et le débit d'eau dans le réfrigérant ont en outre été réglés de manière à respecter, à tout moment, les conditions suivantes:

$$\Delta T_s \leq 5°C$$

$$\frac{\Delta T_2 - \Delta T_1}{\ln \dfrac{\Delta T_2}{\Delta T_1}} < 10°C$$

dans lesquelles: $\Delta T_s$ désigne la différence des températures de la suspension de bicarbonate de sodium à l'entrée et à la sortie du réfrigérant;

$\Delta T_1$ désigne la différence entre la température de la suspension et la température de l'eau à l'extrémité d'amont du réfrigérant (par rapport au sens de circulation de la suspension);

$\Delta T_2$ désigne la différence entre la température de la suspension et la température de l'eau à l'extrémité d'aval du réfrigérant.

On a consigné au tableau ci-dessous l'évolution, au cours du temps des températures de l'eau et du courant de suspension aqueuse de bicarbonate de sodium à l'entrée et à la sortie du réfrigérant. A tout instant, la température moyenne dans la chambre de cristallisation est approximativement égale à la température du courant de suspension aqueuse à l'entrée du réfrigérant. Le tableau reproduit par ailleurs les valeurs $\Delta T_s$ et

$$\frac{\Delta T_2 - \Delta T_1}{\ln \dfrac{\Delta T_2}{\Delta T_1}},$$

telles qu'elles sont définies ci-dessus.

Les cristaux de bicarbonate de sodium recueillis à l'issue de l'essai, qui a duré 225 min., étaient bien cristallisés. Ils présentaient les caractéristiques suivantes:

diamètre moyen des grains: 110 $\mu$m
poids spécifique apparent: 0,751 kg/dm³

Par ailleurs, on n'a pas observé, à l'issue de l'essai, la présence d'un dépôt adhérent de bicarbonate de sodium sur les plaques du réfrigérant.

| Durée de la carbonatation (min) | Températures (°C) | | | | | $\Delta T_2 - \Delta T_1$ |
| --- | --- | --- | --- | --- | --- | --- |
| | Saumure ammoniacale carbonatée | | | Eau | | |
| | Entrée réfrigérant $(T_{S1})$ | Sortie réfrigérant $(T_{S2})$ | $\Delta T_S = T_{S1} - T_{S2}$ | Entrée réfrigérant $(T_{E1})$ | Sortie réfrigérant $(T_{E2})$ | $\ln \dfrac{\Delta T_2}{\Delta T_1}$ |
| 90 | 59,2 | 55,5 | 3,7 | 54,5 | 55,0 | 2,0 |
| 105 | 56,0 | 51,0 | 5,0 | 48,0 | 49,0 | 3,9 |
| 120 | 52,0 | 46,5 | 5,5 | 40,0 | 42,0 | 9,8 |
| 142 | 46,5 | 42,0 | 4,5 | 37,2 | 39,0 | 2,9 |
| 160 | 42,0 | 38,0 | 4,0 | 32,0 | 34,0 | 9,0 |
| 180 | 38,1 | 34,8 | 3,3 | 29,0 | 30,8 | 6,7 |
| 200 | 34,6 | 31,3 | 2,3 | 26,2 | 27,9 | 7,2 |
| 210 | 33,0 | 29,4 | 3,6 | 24,1 | 25,8 | 5,3 |
| 220 | 31,1 | 27,5 | 3,6 | 22,0 | 23,8 | 8,1 |
| 225 | 30,2 | 27,2 | 3,0 | 22,0 | 23,2 | 5,6 |

Définitions: $\Delta T_1 = T_{S1} - T_{E2}$
$\Delta T_2 = T_{S2} - T_{E1}$

## Revendications

1. Procédé pour la préparation de cristaux de bicarbonate de sodium selon lequel on traite une saumure ammoniacale carbonatée avec un gaz contenant de l'anhydride carbonique dans une chambre de cristallisation en présence de cristaux de bicarbonate de sodium et, simultanément, on prélève un courant de saumure ammoniacale carbonatée hors de ladite chambre, on le refroidit et on le recycle dans la chambre, caractérisé en ce qu'on règle le débit et/ou le refroidissement du courant de saumure ammoniacale carbonatée de manière à abaisser progressivement la température de la saumure ammoniacale carbonatée dans la chambre de cristallisation depuis une valeur maximum comprise entre 40 et 70°C jusqu'à une valeur minimum comprise entre 15 et 30°C, au fur et à mesure qu'on la traite avec le gaz.

2. Procédé selon la revendication 1, caractérisé en ce qu'on fait circuler la saumure ammoniacale carbonatée dans plusieurs zones consécutives de la chambre de cristallisation, pendant qu'on la traite avec le gaz, et en ce que, pour régler le débit et/ou le refroidissement du courant de saumure ammoniacale carbonatée, on prélève celui-ci en plusieurs fractions distinctes, respectivement hors des zones de la chambre, on refroidit séparément les fractions et on les recycle chacune dans la zone d'où elle provient.

3. Procédé selon la revendication 2, caractérisé en ce qu'on fait circuler la saumure ammoniacale carbonatée à contre-courant du gaz, dans la chambre de cristallisation.

4. Procédé selon l'une quelconque des revendications 1 à 3, caractérisé en ce qu'avant de refroidir le courant de saumure ammoniacale carbonatée, on le soumet à une opération de dégazage et on le désursature en bicarbonate de sodium.

5. Procédé selon l'une quelconque des revendications 1 à 4, caractérisé en ce qu'on règle le débit et/ou le refroidissement du courant de saumure ammoniacale carbonatée, de manière à faire décroître la température de la saumure ammoniacale carbonatée dans la chambre de cristallisation, depuis une valeur maximum comprise entre 50 et 65°C jusqu'à une valeur minimum comprise entre 20 et 30°C.

6. Procédé selon l'une quelconque des revendications 1 à 5, caractérisé en ce que, pour refroidir le courant de saumure ammoniacale carbonatée, on le fait circuler au contact d'au moins une paroi qu'on refroidit, de manière à abaisser la température du courant d'une valeur comprise entre 2 et 5°C au contact de la paroi, et à réaliser, le long de la paroi, un écart logarithmique moyen égal, au maximum, à 10°C.

7. Installation pour la préparation de cristaux de bicarbonate de sodium par le procédé selon l'une quelconque des revendications 1 à 6, comprenant, d'une part, une chambre de cristallisation (1) qui présente une ouverture d'admission (5) d'un gaz contenant de l'anhydride carbonique, une ouverture d'admission (3) d'une saumure ammoniacale carbonatée à une extrémité de la chambre et une ouverture de soutirage (6) d'une suspension aqueuse de bicarbonate de sodium à l'extrémité opposée de la chambre, et, d'autre part, un dispositif de refroidissement (8) de la saumure ammoniacale carbonatée, caractérisé en ce que le dispositif de refroidissement comprend des réfrigérants (9) qui sont disposés à l'extérieur de la chambre de cristallisation, l'un derrière l'autre entre les deux extrémités précitées, et qui sont raccordés à la chambre de cristallisation, chacun par une conduite d'admission (10) et une conduite de retour (11) d'une fraction de la saumure ammoniacale carbonatée.

8. Installation selon la revendication 7, caractérisée en ce que la chambre de cristallisation (1) est constituée d'une colonne verticale à cloisons transversales ajourées (2), en ce que l'ouverture d'admission (3) de la saumure ammoniacale carbonatée et l'ouverture d'admission (5) du gaz sont disposées respectivement aux extrémités opposées de la colonne, et en ce que les réfrigérants (9) sont raccordés à la colonne, chacun entre deux cloisons ajourées successives (2).

9. Installation selon la revendication 7 ou 8, caractérisée en ce qu'elle comprend en outre, sur chacune des conduites d'admission (10) d'une fraction de la saumure ammoniacale carbonatée dans les réfrigérants (9), une chambre (15) pour la désursaturation de ladite fraction en bicarbonate de sodium.

## Patentansprüche

1. Verfahren zur Herstellung von Natriumbicarbonatkristallen, bei welchem man eine mit einem Kohlendioxid enthaltenden Gas carbonisierte ammoniakalische Sole in einer Kristallisationskammer in Gegenwart von Natriumbicarbonatkristallen behandelt und gleichzeitig einen Strom von carbonisierter ammoniakalischer Sole aus dieser Kammer abzieht, den Strom abkühlt und in die Kammer zurückführt, dadurch gekennzeichnet, dass man die Menge und/oder die Abkühlung des Stromes der carbonisierten ammoniakalischen Sole derart regelt, dass die Temperatur der carbonisierten ammoniakalischen Sole in der Kristallisationskammer von einem Höchstwert zwischen 40 und 70°C fortschreitend bis auf einen Mindestwert zwischen 15 und 30°C nach Massgabe ihrer Behandlung mit dem Gas abgesenkt wird.

2. Verfahren nach Anspruch 1, dadurch gekennzeichnet, dass man die carbonisierte ammoniakalische Sole in mehreren aufeinanderfolgenden Zonen der Kristallisationskammer zirkulieren lässt, während man sie mit dem Gas behandelt, und dass man zur Regelung der Menge und/oder der Abkühlung des Stromes der carbonisierten ammoniakalischen Sole diesen Strom in mehreren unterschiedlichen Fraktionen aus den Zonen der Kammer abzieht, die Fraktionen getrennt abkühlt und jede Fraktion in jene Zone zurückführt, aus der sie stammt.

3. Verfahren nach Anspruch 2, dadurch gekennzeichnet, dass man in der Kristallisationskammer die carbonisierte ammoniakalische Sole im Gegenstrom zum Gas zirkulieren lässt.

4. Verfahren nach einem der Ansprüche 1 bis 3, dadurch gekennzeichnet, dass man vor dem Abkühlen des Stromes der carbonisierten ammoniakalischen Sole diesen Strom einer Entgasungsbehandlung unterwirft und von einer Übersättigung an Natriumbicarbonat befreit.

5. Verfahren nach einem der Ansprüche 1 bis 4, dadurch gekennzeichnet, dass man die Menge und/oder die Abkühlung des Stromes der carbonisierten ammoniakalischen Sole derart regelt, dass die Temperatur der in der Kristallisationskammer carbonisierten ammoniakalischen Sole von einem Höchstwert zwischen 50 und 65°C auf einen Mindestwert zwischen 20 und 30°C absinkt.

6. Verfahren nach einem der Ansprüche 1 bis 5, dadurch gekennzeichnet, dass man zum Abkühlen des Stromes der carbonisierten ammoniakalische Sole diesen Strom in Berührung mit mindestens einer Wand, die man kühlt, umlaufen lässt, um die Temperatur des Stromes um einen Wert zwischen 2 und 5°C beim Kontakt mit der Wand abzusenken und um entlang der Wand ein mittleres logarithmisches Gefälle entsprechend höchstens 10°C zu bewirken.

7. Vorrichtung zur Herstellung von Natriumbicarbonatkristallen nach dem Verfahren gemäss einem der Ansprüche 1 bis 6, umfassend eine Kristallisationskammer (1) einerseits, die eine Zuführöffnung (5) für ein Kohlendioxid enthaltendes Gas, eine Zuführöffnung (3) für eine carbonisierte ammoniakalische Sole an einem Ende der Kammer und eine Entnahmeöffnung (6) für eine wässerige Suspension von Natriumbicarbonat am gegenüberliegenden Ende der Kammer aufweist, und eine Abkühlvorrichtung (8) für die carbonisierte ammoniakalische Sole anderseits, dadurch gekennzeichnet, dass die Abkühlvorrichtung Kühler (9) umfasst, die ausserhalb der Kristallisationskammer einer nach dem anderen zwischen den beiden vorgenannten Enden angeordnet sind und die mit der Kristallisationskammer jeweils über eine Zuführungsleitung (10) und eine Rückleitung (11) einer Fraktion der carbonisierten ammoniakalischen Sole in Verbindung stehen.

8. Vorrichtung nach Anspruch 7, dadurch gekennzeichnet dass die Kristallisationskammer (1) aus einer vertikalen Kolonne mit transversalen durchbrochenen Böden (2) besteht, dass die Zuführöffnung (3) für die carbonisierte ammoniakalische Sole bzw. die Zuführöffnung (5) für das Gas an den gegenüberliegenden Enden der Kolonne angeordnet sind, und dass die Kühler (9) jeweils zwischen zwei aufeinanderfolgenden durchbrochenen Böden (2) an die Kolonne angeschlossen sind.

9. Vorrichtung nach Anspruch 7 oder 8, dadurch gekennzeichnet, dass sie ausserdem in jeder Zuführungsleitung (10) für eine Fraktion der carbonisierten ammoniakalischen Sole in die Kühler (9) eine Kammer (15) zur Beseitigung der Übersättigung der genannten Fraktion an Natriumbicarbonat aufweist.

## Claims

1. Process for the preparation of sodium bicarbonate crystals, in which a carbonated ammoniacal brine is treated with a gas containing carbon dioxide, in a crystallisation chamber, in the presence of sodium bicarbonate crystals, and a stream of carbonated ammoniacal brine is simultaneously removed from the said chamber, cooled and recycled into the chamber, characterised in that the flow and/or the cooling of the stream of carbonated ammoniacal brine is adjusted so as progressively to lower the temperature of the carbonated ammoniacal brine in the crystallisation chamber from a maximum value of between 40 and 70°C to a minimum value of between 15 and 30°C, as the brine is being treated with the gas.

2. Process according to Claim 1, characterised in that the carbonated ammoniacal brine is circulated in several consecutive zones of the crystallisation chamber whilst it is being treated with the gas, and in that, in order to adjust the flow and/or the cooling of the stream of carbonated ammoniacal brine, the stream is removed in several separate fractions from the respective zones of the chamber, and the fractions are cooled separately and each recycled into the zone from which it originates.

3. Process according to Claim 2, characterised in that the carbonated ammoniacal brine is circulated in counter-current to the gas, in the crystallisation chamber.

4. Process according to any one of Claims 1 to 3, characterised in that, before the stream of carbonated ammoniacal brine is cooled, it is subjected to a degassing operation and desupersaturated in respect of sodium bicarbonate.

5. Process according to any one of Claims 1 to 4, characterised in that the flow and/or the cooling of the stream of carbonated ammoniacal brine is adjusted so as to lower the temperature of the carbonated ammoniacal brine in the crystallisation chamber from a maximum value of between 50 and 65°C to a minimum value of between 20 and 30°C.

6. Process according to any one of Claims 1 to 5, characterised in that, in order to cool the stream of carbonated ammoniacal brine, it is circulated in contact with at least one wall which is cooled, so as to lower the temperature of the stream by a value of between 2 and 5°C in contact with the wall, and so as to produce, along the wall, an average logarithmic difference equal to at most 10°C.

7. Installation for the preparation of sodium bicarbonate crystals by the process according to any one of Claims 1 to 6, comprising, on the one hand, a crystallisation chamber (1), which possesses an inlet orifice (5) for a gas containing carbon dioxide, an inlet orifice (3) for a carbonated ammoniacal brine at one end of the chamber, and a drawing-off orifice (6) for an aqueous suspension of sodium bicarbonate at the opposite end of the chamber, and, on the other hand, a cooling device (8) for the carbonated ammoniacal brine, characterised in that the cooling device comprises coolers (9) which are arranged behind one another on the outside of the crystallisation chamber, between the two ends mentioned above, and which are each joined to the crystallisation chamber by an inlet pipe (10) and a return pipe (11) for a fraction of the carbonated ammoniacal brine.

8. Installation according to Claim 7, characterised in that the crystallisation chamber (1) consists of a vertical column with perforated transverse partitions (2), in that the inlet orifice (3) for the carbonated ammoniacal brine and the inlet orifice (5) for the gas are respectively arranged at the opposite ends of the column, and in that the coolers (9) are each connected to the column between two successive perforated partitions (2).

9. Installation according to Claim 7 or 8, characterised in that it also comprises, on each of the inlet pipes (10) for introducing a fraction of the carbonated ammoniacal brine into the coolers (9), a chamber (15) for the desupersaturation of the said fraction in respect of sodium bicarbonate.

9.

FIG 1

# FIG 2